# EUROPEAN PATENT SPECIFICATION

(11) **EP 0 428 903 B1**
(45) Date of publication and mention of the grant of the patent: **22.12.1993**
(21) Application number: 90120456.0
(22) Date of filing: 25.10.1990
(51) Int. Cl.: G01B 11/06, G01B 7/02

(54) **Method and equipment to check and regulate the positioning of metallic backing strands into rubber sheets specifically for the construction of tires**
Verfahren und Vorrichtung zum Kontrollieren und Regulieren der Positionierung metallischer Verstärkungsdrähte innerhalb Gummibogen, insbesondere für die Reifenherstellung
Méthode et appareillage pour contrôler et réguler le positionnement de fils métalliques de renforce dans des feuilles de caoutchouc, en particulier pour la construction de pneumatiques

(30) Priority: 17.11.1989 IT 2243289
(43) Date of publication of application: 29.05.1991
(73) Proprietor: ELECTRONIC SYSTEMS S.P.A., Lonate Pozzolo (Varese) (IT)
(72) Inventor: Masotti, Alessandro, I-28040 Lesa (Novara) (IT)
(74) Representative: La Ciura, Salvatore

(56) References cited:
- DE-A- 3 437 449
- DE-A- 3 642 377
- PATENT ABSTRACTS OF JAPAN, vol. 11, no. 107 (M-563)[2554], 4th April 1987; & JP-A-61 254 812 (MEISAN K.K.) 12-11-1986

## Description

The present invention proposes a method and the relative equipment to check and regulate the position of the "metallic cord", that is, the position of the steel backing strands used particularly for the reinforcement of tires.

The method requires the use of a pair of magnetic proximity sensors facing one another, installed on opposite sides with respect to the sheet and of a pair of laser-beam distance-meters coupled with the said sensors.

The lasers check the exact thickness of the sheet while the proximity meters regulate the position and thickness of the metallic cord.

Among the numerous problems faced in the tire production industry, one is the insertion of a suitable reinforcement mesh in the tire. This reinforcement mesh is usually made of steel wires.

This reinforcement mesh, technically called "cord", must be positioned perfectly in the sheet used for this purpose, in order to ensure the regular functioning of the tire as well as to facilitate its balance.

Presently, to execute the necessary checks on the positioning of the cord on the inside of the carcass, X-Ray or Gamma Ray equipment is used.

However, this equipment is dangerous due to the radiation produced which is difficult to control.

Furthermore, this system cannot function completely automatically for a long period of time, in that it always requires a self-calibrating operation.

Therefore, there is a need in the industry for means which permit the carrying out of the necessary checks without having to resort to machines which produce dangerous radiation.

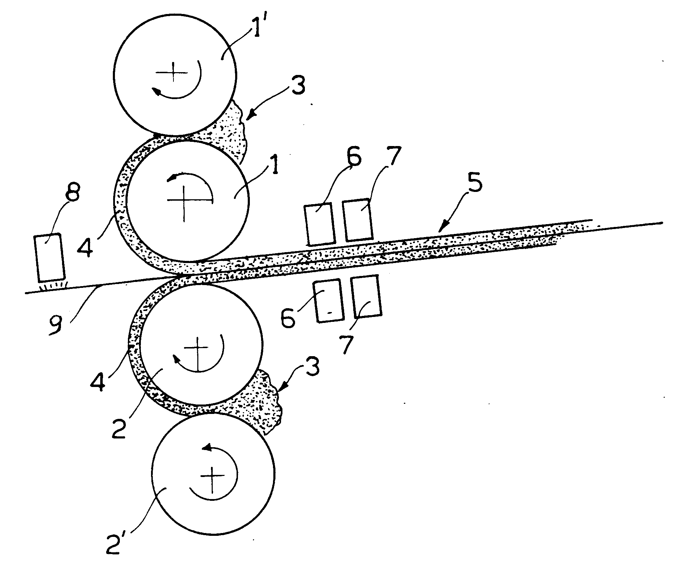

Such means will preferably permit a completely automatic functioning of the equipment and also be simple to produce and need only limited maintenance. A device for measuring the thickness of sheet material is shown in JP-A-61 254 812
Figure 1 shows a general view of the apparatus

In order to solve the stated problem, the present invention as defined in claim 1 proposes a method and the relative equipment to check and regulate the positioning of the metallic backing strands in the rubber sheets used in the construction of tires. A pair of laser-beam distance-meters, facing one another and installed on opposite sides with respect to the reinforced rubber strip, check its thickness during the production, while a pair of magnetic proximity sensors, also installed on opposite sides of the strip, accurately detect the position of the strands.

Another proximity sensor is provided for, which will be installed before the machine along the path of the steel strands, in order to provide a reference signal which will be compared to the signal from the two sensors installed at the other end of the machine, providing the parameters which permit the control devices to discover possible irregularities in the thickness of the strands.

The present invention will now be described in detail, as an unrestrictive example, with particular reference to the single enclosed drawing which schematically illustrates a piece of equipment for the production of sheets used for the construction of the tire carcass.

With reference to the drawing, a calender for the production of a "metallic cord" for tires is composed of two pairs of rollers (1-1' and 2-2' respectively) in contact with a rubber feeding mechanism not illustrated in the drawing.

Both pairs 1-1' and 2-2' work on a mass of rubber indicated by the number 3, producing a thin layer (4) which wraps itself around the opposed cylinders 1 and 2. The two rubber layers (4) are tightened around the strands in order to make up a strip (5) with the inserted backing strands (9).

These strands remain between the two rubber strips (4), positioned as accurately as possible.

In order to check the exact positioning and in particular, the perfect centering of the layer of steel wires in relation to the two layers of rubber coating, a pair of laser-beam distance-meters (6) are used as well as a pair of magnetic proximity sensors (7).

The laser sensors, as well as the proximity sensors, are installed on opposite sides with respect to the cord.

The laser sensors direct a ray towards the respective surface of the cord. This ray is reflected and read by means of a suitable detector, thereby showing the exact distance between the surface of the cord and the relative laser. On the other hand, the magnetic sensors, which have a transparent rubber coating, produce a signal which is a function of the density of the strands and of their distance from the sensors.

In particular, by using two oppositely installed sensors one can discover the exact position and therefore check the exact centering of the cord in relation to the coating, by a simple comparison of the signals generated by the sensors.

The sensors and the laser detectors are mounted on a support which is not fixed but rather moves horizontally and perpendicularly to the feeding direction of the rubber sheet, so that the entire surface of the sheet can be scanned. The signals are then processed to show the thickness of the sheet and the position of the strands directly on video.

These signals are also sent to the controlling units of the machine in order to regulate the position of the metallic strands, the distance between the calender rollers and the other parameters in order to obtain a perfect centering of the steel wires.

On the other hand, to check the density of these wires one can compare the signal generated by the sensors (7) with the signal produced by a similar sensor (8) installed before the equipment and which directly feels the mesh of strands before it is coated with rubber.

Knowing the characteristics of the mesh before passing into the calender from the comparison between the signals generated before and after the application of the coating, with well-known algorithms it is possible to obtain, with sufficient accuracy, all the necessary information on the metallic cord even after the coating has been applied.

With the method and the equipment just described, it is possible to check, with the necessary accuracy, the positioning of the strands without having to resort to the use of X-Rays or the like. The use of laser and proximity sensors permits the attainment of signals which can be processed and sent directly to the equipment control devices in order to automatically perform all the necessary controls.

## Claims

1. Method to check and regulate the positioning of metallic backing strands (9) within rubber sheets (4) for the construction of tires, which consists in detecting the thickness and the position of the rubber coating by means of a pair of laser-beam distance-meters (6) facing one another and installed on opposite sides with respect to the said coating, and in detecting the position of a metallic cord (9) inside the coating by means of a pair of first magnetic proximity sensors (7) paired with the laser meters.

2. Method, in accordance with claim 1, further comprising sensing the metallic cord to provide detected data by means of a second magnetic proximity meter installed before a calender which applies the coating and subsequently comparing the detected data with that generated by the first magnetic proximity sensors in order to check the density of the strands inside the layers of coating, where said first magnetic proximits sensors are installed on the other side of the calender.

3. The equipment for the carrying out of the method outlined in claims 1 and 2, with the provision for:
- a pair of laser-beam distance-meters (6) facing one another and installed in use on opposite sides with respect to the metallic cord
- a pair of first magnetic proximity sensors (7) paired to the above-mentioned detectors
- suitable means to move, in alternating manner and perpendicularly to the feeding direction of the rubber sheets, the support on which the above-mentioned sensors and distance-meters are mounted
- suitable means to visualize the detected information on a display
- suitable means to receive and process the signals from the detectors and meters and to consequently intervene on the machine's regulating devices.

4. The equipment, in accordance with claim 3, with the provision for a second magnetic proximity sensor installed before a calender that applies the coating, which generates a signal proportional to the density of the steel strands and suitable means to compare this signal with the signal produced by the first magnetic proximity sensors where the first magnetic proximity sensors are installed on the other side of the calender.

## Patentansprüche

1. Verfahren zum Prüfen und Kontrollieren der Positionierung von metallischen Verstärkungsdrähten (9) innerhalb von Gummibahnen (4) für den Aufbau von Reifen, das besteht aus dem Feststellen der Dicke und der Position der Gummibeschichtung mittels eines Paares von Laserstrahl - Distanzmeßgräten (6), die einander gegenüberliegen und auf gegenüberliegenden Seiten bezüglich der Beschichtung angeordnet sind, und dem Feststellen der Position eines metallischen Cords (a) innerhalb der Beschichtung mittels eines Paares von ersten magnetischen Näherungssensoren (7), gepaart mit den Lasermeßgeräten.

2. Verfahren nach Anspruch 1, das weiterhin umfaßt das Abtasten des metallischen Cords, um festgestellte Daten bereitzustellen, mittels eines zweiten magnetischen Näherungsmeßgerätes, das vor einem Kalander angeordnet ist, der die Beschichtung liefert, und anschließendes Vergleichen der festgestellten Daten mit denen, die durch die ersten magnetischen Näherungssensoren erzeugt werden, um die Dichte der Drähte innerhalb der Schichten der Beschichtung zu prüfen, wobei diese ersten magnetischen Näherungssensoren auf der anderen Seite des Kalanders angeordnet sind.

3. Vorrichtung zum Ausführen des Verfahrens nach Anspruch 1 und 2, mit
einem Paar von Laserstrahl - Distanzmeßgeräten (6), die einander gegenüberliegen und beim Gebrauch auf gegenüberliegen Seiten bezüglich des metallischen Cords angeordnet sind,
einem Paar von ersten magnetischen Näherungssensoren (7), die den zuvor erwähnten Dedektoren bzw. Meßgeräten zugeordnet sind,
einer geeigneten Einrichtung, um abwechselnd und senkrecht zur Förderrichtung der Gummibahn einen Träger zu bewegen, auf dem die zuvor erwähnten Sensoren und Distanz - Meßgeräte montiert sind,
einer geeigneten Einrichtung, um die festgestellte Information auf einer Anzeige optisch wiederzugeben, und einer geeigneten Einrichtung, um die Signale von den Dedektoren und Meßgeräten zu empfangen und zu verarbeiten und um dementsprechend auf Reguliereinrichtungen der Maschine einzuwirken.

4. Vorrichtung nach Anspruch 3, mit einem zweiten magnetischen Näherungssensor, der vor einem Kalander angeordnet ist, der die Beschichtung liefert, wobei der Sensor ein Signal proportional der Dichte der Stahldrähte erzeugt, und mit einer geeigneten Einrichtung zum Vergleichen dieses Signals mit dem von den ersten magnetischen Näherungssensoren erzeugten Signals, wobei die ersten magnetischen Näherungssensoren auf der anderen Seite des Kalanders angeordnet sind.

## Revendications

1. Procédé de vérification et de régulation du positionnement de torons métalliques (9) de renfort à l'intérieur de feuilles (4) de caoutchouc pour la fabrication de pneumatiques, qui consiste à détecter l'épaisseur et la position du revêtement en caoutchouc au moyen d'une paire de dispositifs de mesure (6) de distance à faisceau laser, tournés l'un vers l'autre et installés sur des côtés opposés par rapport audit revêtement, et à détecter la position d'un câble métallique (9) à l'intérieur du revêtement au moyen d'une paire de premiers capteurs magnétiques (7) de proximité, appairés avec les dispositifs de mesure laser.

2. Procédé selon la revendication 1 comprenant en outre une détection du câble métallique, afin de fournir une donnée détectée au moyen d'un deuxième dispositif de mesure magnétique de proximité installé avant une calandre qui applique le revêtement, et ensuite une comparaison de la donnée détectée avec celle qui a été engendrée par les premiers capteurs magnétiques de proximité, afin de vérifier la densité des torons à l'intérieur des couches de revêtement, lesdits premiers capteurs magnétiques de proximité étant installés sur l'autre côté de la calandre.

3. L'Equipement de mise en oeuvre du procédé selon l'une des revendications 1 ou 2, comprenant:
- une paire de dispositifs de mesure (6) de distance à faisceaux laser, tournés l'un vers l'autre et installés en utilisation sur des côtés opposés par rapport au câble métallique,
- une paire de premiers capteurs magnétiques (7) de proximité appairés aux détecteurs mentionnés ci-dessus,
- un moyen apte à déplacer en va et vient, et perpendiculairement à la direction d'amenée des feuilles de caoutchouc, le support sur lequel sont montés les capteurs et les dispositif de mesure de distance mentionnés ci-dessus ,
- un moyen adapté de visualisation, sur un affichage, de l'information détectée ,
- un moyen apte à recevoir et à traiter des signaux venant des détecteurs et des dispositifs de mesure et à intervenir en conséquence sur le dispositif régulateur de la machine.

4. L'Equipement selon la revendication 5, comprenant un deuxième capteur magnétique de proximité, installé avant une calandre qui applique le revêtement, qui engendre un signal proportionnel à la densité des torons d'acier et un moyen apte à comparer ce signal avec le signal produit par les premiers capteurs magnétiques de proximité, les premiers capteurs magnétiques de proximité étant installés sur l'autre côté de la calandre.
